Europäisches Patentamt

European Patent Office

Office européen des brevets

(11) Publication number: **0 358 499**
A2

# EUROPEAN PATENT APPLICATION

(21) Application number: 89309060.5

(22) Date of filing: 07.09.89

(51) Int. Cl.⁵: **C 08 L 67/02**
//(C08L67/02,25:02)

(30) Priority: 09.09.88 IT 2188288

(43) Date of publication of application:
14.03.90 Bulletin 90/11

(84) Designated Contracting States:
AT BE DE ES FR GB NL SE

(71) Applicant: MONTEDIPE S.r.l.
31 Foro Buonaparte
I-20100 Milan (IT)

(72) Inventor: Fiore, Leonardo
46 Via De Lemene
I-20181 Milano (IT)

Borghi, Italo
49 Via Aldighieri
I-44100 Ferrara (IT)

Mattiussi, Andrea
5 Piazza Amendola
I-20149 Milano (IT)

(74) Representative: Jones, Helen Marjorie Meredith et al
Gill Jennings & Every 53-64 Chancery Lane
London WC2A 1HN (GB)

(54) Rapidly-crystallizing polyester compositions.

(57) Rapidly crystallizing polyester compositions comprising a polyester thermoplastic resin and a styrene polymer having an essentially syndiotactic structure.

EP 0 358 499 A2

## Description

## RAPIDLY-CRYSTALLIZING POLYESTER COMPOSITIONS

The present invention relates to rapidly-crystallizing polyester compositions. More particularly, the present invention relates to compositions based on linear polyesters, particularly suitable for injection-moulding applications.

Saturated, linear, thermoplastic polyesters, such as poly-(ethylene terephthalate), its copolymers and compounded blends are bulk products manufactured at relatively low cost. In their crystalline state, they show excellent physical and mechanical properties consistently with their high melting point.

Unfortunately, formulations based on the above said polyesters are not very widely applied in injection-moulding applications, mainly owing to the difficulties met in obtaining suitably crystallized manufactured articles using the traditional moulds. Poly-(ethylene terephthalate) (PET) free of additives crystallizes very slowly from its molten phase, rendering the process disadvantageous from an economic viewpoint and generating articles which have an uneven crystalline structure of spherulitic type, poor impact strength and rough surfaces. Its processing requires high moulding temperatures and, in order to obtain dimensionally stable articles, long residence times inside the moulds are required. In fact, the early removal from a mould of an insufficiently crystallized manufactured article may cause the article to further crystallize over time, with the article consequently changing in volume and possibly undergoing shape distortions.

Moulding compositions of poly-(ethylene terephthalate) (PET) containing substances which increase the crystallization speed, generally called "nucleating agents," are known.

For that purpose, the following materials are used:
1. Materials derived from:
    (a) hydrocarbyl acids having a relatively high molecular weight, or organic polymers containing at least one carboxy group; and
    (b) sources of sodium and/or potassium ions capable of reacting with the carboxy group in the acid or in the polymer as specified under (a); and
2. low-molecular-weight organic compounds comprising esters, ketones, sulfones, sulfoxides, nitriles and amides.

However, when higher crystallization speeds or still lower moulding temperatures are required, addition of larger amounts of the above mentioned crystallization agents alone does not achieve satisfactory results, in that often the effect of the nucleating agents decreases as the concentration increases. Also those compounds can exert negative effects on the physical properties of the moulded articles manufactured from compositions containing them. Furthermore, the use of nucleating agents of ionic character (salts, esters) causes degradation of the polymer, with the consequent decay of the mechanical properties.

Therefore, there is a need in the art to make available compositions which are capable of being injection-moulded to yield high-quality finished articles even at low moulding temperatures, and which have a high rate of crystallization, but which provide products whose physical properties are not adversely affected.

The applicant has found now that the above reported effects can be obtained by using a new nucleating agent constituted by a styrene polymer having a substantially syndiotactic structure.

Therefore, a new rapidly-crystallizing composition according to the present invention comprises a thermoplastic polyester resin, usually poly-(ethylene terephthalate), and an effective amount of a nucleating agent, characterised in that the nucleating agent comprises a styrene polymer having an essentially syndiotactic structure.

The styrene polymers having an essentially syndiotactic structure are known products. Their preparation is disclosed in Italian patent applications Nos. 41,007 A/86 and 22,827 A/86 in the name of Montedison, the contents of which are herein incorporated as an integral part of the disclosure.

The essentially syndiotactic structure of these styrene polymers was attributed on the basis of the data obtained from X-ray diffractometry, from IR spectroscopic analysis, from $^1$H-N.M.R. and from $^{13}$C-N.M.R.

In particular, polystyrene having an essentially syndiotactic structure is characterised by an $^1$H-N.M.R. spectrum which shows chemical shifts of the methynic and methylenic protons respectively centered at 1.9 and 1.4 ppm. Furthermore, the X-ray diffraction spectra of the residue from extraction with methyl-ethyl-ketone, after melting and solidification, shows highest-intensity reflexes corresponding to interplanar distances of 13.1 Å; 7.6 Å; 6.46 Å; 4.37 Å; and 2.58 Å. (1.31, 0.76, 0.646, 0.437 and 0.258nm, respectively).

Polyparamethylstyrene having an essentially syndiotactic structure is characterised by a $^{13}$C-N.M.R. spectrum showing, in the region of the chemical shifts of the ring carbon atom linked to the -CH- group of the main chain, a single peak at 140.8 ppm, indicating a high stereoregularity of the polymeric chain. Furthermore, the X-ray diffraction spectrum of a stretched fibre, made from a polyparamethylstyrene having an essentiallly syndiotactic structure, shows a repetition period of 5.1 Å (0.51nm), along the chain axis, indicating a planar zig-zag structure of the polymeric chain, typical of a syndiotactic steric configuration.

By the expression "essentially syndiotactic structure" as used in this specification is meant that such a structure exists at least along long portions of the polymeric chains.

The molecular weight of styrene polymers having an essentially syndiotactic structure used in the compositions according to the present invention can be in the range of from 25,000 up to 1,200,000 (expressed as the weight average molecular weight Mw), but is preferably in the range of from 100,000 up to 800,000.

Syndiotactic styrene polymers having a melting temperature of at least 250°C, and in particular in the range of from 260°C up to 275°C are preferred.

The definition of "styrene polymers" in this specification includes homopolymers and copolymers, preferably with up to 30% by weight comonomer, of styrene and vinyl-aromatic monomers of the formula

$$CH_2 = CH\text{-}R$$

wherein R is an aryl radical, an alkyl-aryl radical, or a halogen-substituted aryl radical, containing from 6 to 20 carbon atoms, any comonomer being an ethylenically unsaturated, copolymerizable monomer, the polymers having an essentially syndiotactic structure.

Among the preferred styrene polymers, besides polystyrene, syndiotactic polyparamethylstyrene and the copolymers of styrene with polyparamethylstyrene, having a syndiotactic structure, may be cited herein.

In order to accomplish the composition according to the present invention, any thermoplastic polyester resin can be used, which is obtained by means of the well-known processes of polycondensation of an aromatic diacid, or of mixtures of aromatic diacids, such as terephthalic acid, or of a cycloaliphatic acid, such as cyclohexanedicarboxylic acid, and their alkylesters, with aliphatic, aromatic or cycloaliphatic glycols, such as ethylene glycol, butylene glycol, and so forth.

The term "thermoplastic polyester resin" is understood to also encompass the polycondensation products containing, besides the aromatic acid and a glycol, amounts comprised within the range of from 0.01 up to 10% by weight of an aliphatic acid containing from 1 to 16 carbon atoms and/or a poly-oxyalkylene-glycol containing from 1 to 6 carbon atoms in its oxyalkylenic chain.

In general, the polyester resin has a molecular weight higher than 5,000.

Poly-(ethylene terephthalate) (PET) and its copolymers containing small amounts of poly-oxyethylene-glycol are preferred.

The nucleating agent can be added to the polyester resin:

1. either directly, in amounts generally not larger than 30% by weight, and preferably in amounts in the range of from 0.01 up to 10% by weight, based on the weight of the polyester; or

2. by providing a master batch by mixing polyester with high concentrations of nucleating agent, and then mixing a portion of that masterbatch with a polyester resin.

Said masterbatch can be obtained by means of the normal compounding techniques, by adding the nucleating agent at concentrations in the range of from 0.5 up to about 50% by weight, and preferably in the range of from 2 up to 30% by weight, relative to the polyester resin.

The molecular weight and the physico-chemical properties, such as viscosity, of the masterbatch containing the nucleating agent used in order to prepare the composition according to the present invention may vary within wide limits, as a function of the operating conditions, the type of polyester and of styrene polymer used.

However, in general, the masterbatch containing the nucleating agent according to the present invention has an intrinsic viscosity, as measured in 60:40 phenol/tetrachloroethane at a concentration of 0.25 dl/g and at 30°C, higher than 0.1 dl/g, and a number average molecular weight (Mn) higher than 1000.

If the nucleating agent is added directly (above case 1), the nucleating agent is compounded with the thermoplastic polyester resin in the molten state preferably in an amount in the range of from 0.01 up to about 10% by weight, relative to the polyester resin.

If the nucleating agent is added by means of a masterbatch (above case 2) the masterbatch is added to the resin in an amount in the range of from 1 up to about 50% by weight, and preferably in the range of from 2 up to about 20% by weight, relative to the polyester resin to which it is being added.

The rapidly-crystallizing polyester compositions according to the present invention are characterised by high crystallization temperatures, high crystallization speeds, evenness of distribution, and low nucleating agent concentrations.

In particular, high crystallization speeds can be obtained by directly adding the nucleating agent in very low concentration (above case 1); furthermore, good nucleation speeds can be accomplished without considerable changes in the viscosity of the polyester composition, even when the nucleating agent is added via a masterbatch.

The nucleating agents can be added to the polyester resin in order to obtain the compositions according to the present invention by means of any conventional methods for adding additives to molten polyester masses, eg, by means of the compounding techniques inside mixers, extruders, and so forth.

The compositions may contain inert fillers, such as fibreglass, carbon fibres, boron fibres, and so forth, and/or inorganic particles of glass, mica, zeolites, graphite, talc, etc., as well as organic fibres of the type of aramidic fibres, polyacrylonitrile fibres, and so on.

Furthermore, conventional additives and/or auxiliary substances can be added to the compositions if necessary, to improve the characteristics of thermal stability, oxidative stability and light stability. Also further additives, such as pigments, dyes, flame-retardants, mould-release agents and various inert fillers can be added. Small amounts of other types of thermoplastic resins or small amounts of rubber compositions can be added to said compositions in order to give them impact-strength properties.

The compositions according to the present invention can be used in order to produce a large number of finished articles by means of injection-moulding or of extrusion techniques; in particular, car parts, electrical parts and the like, can be produced. The compositions can be furthermore used as fibres, films, sheets and so on.

The polyester compositions according to the present invention are characterised by having a process of crystallization from the molten state which is completed within shorter times and at higher temperatures than of the corresponding polyester resin without the additives. This behaviour can be observed by means of the analysis by the differential scanning calorimeter (DSC), from which one can see that the incipient crystallization temperature, the temperature of maximum crystallization speed and the end crystallization temperature are all higher, and are comprised within a narrower range, than the corresponding temperature values of the polyester resin not containing the additives according to the present invention.

A further advantage of the polyester compositions according to the present invention is that for some of them, such as, eg, those containing poly-(ethylene terephthalate) copolymers, the cold crystallization process does not occur even when the molten composition is rapidly cooled, at cooling speeds even higher than 400°C/minute. This behaviour means that a crystallization process from the molten mass in the compositions takes place even when the product undergoes a very quick cooling (ie, a quenching). This is an undoubted technologic advantage in the processes of injection- moulding, in that it allows dimensionally stable finished articles to be obtained.

In order to better understand the present invention, and in order to practice it, in the following some illustrative, non-limitative examples are reported.

The evaluation of the efficiency of the nucleating agent is carried out on the basis of the temperature of the crystallization peak of compounds consisting of polyester resin and nucleating agent during their cooling from their molten mass, as determined by means of differential thermal analysis.

The intrinsic viscosity ($\eta$) is measured in a 60:40 mixture of phenol:tetrachloroethane at 30°C, at a concentration of 0.25 g/dl.

The number average molecular weight (Mn) and the weight average molecular weight (Mw) were computed by gel permeation chromatography (GPC), using m-cresol as the solvent, at 100°C.

The temperatures of crystallization from the molten mass, of incipient crystallization ($T_1$) and of end crystallization ($T_2$) were measured by means of the Perkin Elmer DSC 7 differential calorimeter, by reading the temperature at the peak, at the beginning and at the end of the crystallization exotherm.

Examples 1-3

Inside a mixer, poly-(ethylene terephthalate) having an intrinsic viscosity of 0.78 dl/g, previously dried for 12 hours at 120°C, under vacuum, and syndiotactic polystyrene having a residue from extraction in MEK (methyl-ethyl-ketone), carried out inside a Kuma Gava extractor for 24 hours, of 93%; a weight average molecular weight [as determined by means of the analysis by gel permation chromatography (GPC), carried out by means of a Waters 150 ALC-GPC equipment in orthodichlorobenzene at 135°C] of 660,000; a melting point (determined by means of the Perkins-Elmer DSC 7 differential calorimeter, as the temperature corresponding to the maximum of the endothermic peak, at a scanning speed of 40°C/minute) of 275°C, are compounded in such proportions as shown in Table 1.

When observed at X-rays, the residue from extraction with methyl-ethyl-ketone (MEK) of polystyrene shows, after melting and solidification, highest-intensity reflexes corresponding to interplanar distances of 13.1 Å; 7.6 Å; 6.46 Å; 4.37 Å; and 2.58 Å. (1.31, 0.76, 0.646, 0.437 and 0.258 nm, respectively).

The $^1$H-N.M.R. spectrum of polystyrene, as carried out by means of the BRUKER AM-300 instrument in ortho-dichlorobenzene at 125°C with hexamethyl-disiloxane as the reference standard, shows chemical shifts of the methynic and methlenic protons respectively centered at 1.9 and 1.4 ppm.

The polystyrene was prepared according to the process as disclosed in Italian patent application No. 41,007 A/86 in the name of Montedison S.p.A.

The composition was extruded at 280°C.

The physico-chemical characteristics of the obtained composition are reported in Table 1.

TABLE 1

| Example No. | 1 | 2 | 3 |
|---|---|---|---|
| COMPOSITION: | | | |
| poly-(ethylene terephthalate) % by weight | 100 | 97 | 95 |
| polystyrene, % by weight | -- | 3 | 5 |
| CHARACTERISTICS: | | | |
| CRYSTALLIZATION FROM MOLTEN MASS | | | |
| Incipient crystallization temperature, °C | 213 | 228 | 241 |
| End crystallization temperature, °C | 142 | 172 | 170 |
| Crystallization peak temperature, °C | 170 | 198 | 198 |
| Energy variation ($\Delta H$) , J/g | -38 | -41 | -44 |

Examples 4-6

By operating according to the same modalities as of Example 1, compositions are prepared, which comprise by a copolymer of poly-(ethylene terephthalate), having an intrinsic viscosity of 0.81 dl/g and prepared by means of poly-transesterification of 120 mol of dimethyl terephthalate, 219 mol of ethylene glycol and 1 mol of poly-oxyethylene-glycol having a molecular weight of 1,500, and by syndiotactic polystyrene having the characteristics reported in Example 1.

The compositions and the characteristics of the compounds are reported in following Table 2:

TABLE 2

| Example No. | 4 | 5 | 6 |
|---|---|---|---|
| COMPOSITION: | | | |
| Copolyester , % by weight % by weight | 100 | 97 | 95 |
| polystyrene, % by weight | -- | 3 | 5 |
| CHARACTERISTICS: | | | |
| CRYSTALLIZATION FROM MOLTEN MASS | | | |
| Incipient crystallization temperature, °C | 214 | 245 | 247 |
| End crystallization temperature, °C | 115 | 151 | 147 |
| Crystallization peak temperature, °C | 195 | 210 | 214 |
| Energy variation (ΔH) , J/g | -37 | -41 | -50 |
| COLD CRYSTALLIZATION AFTER QUENCHING AT 480°C/MINUTE | | | |
| Incipient crystallization temperature, °C | 83 | none | none |
| End crystallization temperature, °C | 144 | none | none |
| Crystallization peak temperature, °C | 124 | none | none |
| Energy variation (ΔH) , J/g | -22 | none | none |
| MELTING AFTER QUENCHING AT 480°C/MINUTE | | | |
| Incipient melting temperature, °C | 201 | 187 | 182 |
| End melting temperature, °C | 257 | 282 | 279 |
| Melting peak temperature, °C | 250 | 254 | 258 |
| Energy variation (ΔH) , J/g | 40 | 40 | 41 |

**Claims**

1. A composition comprising a thermoplastic polyester resin and an effective amount of a nucleating agent, characterised in that said nucleating agent is a styrene polymer having an essentially syndiotactic structure.

2. A composition according to claim 1, wherein the styrene polymer has a weight average molecular weight in the range of from 25,000 up to 1,200,000, preferably in the range of from 100,000 up to 800,000.

3. A composition according to claim 1 or 2, wherein the styrene polymer has a melting temperature of at least 250°C, preferably in the range of from 260°C to 275°C.

4. A composition according to any of the preceding claims, wherein the styrene polymer having an essentially syndiotactic structure is a homopolymer or a copolymer, preferably with up to 30% by weight of an ethylenically-unsaturated. copolymerisable monomer styrene or a vinyl-aromatic monomer of the formulaCH$_2$ = CH-R

wherein R is an alkyl-aryl radical or a halogen-substituted aryl radical.

5. A composition according to any of the preceding claims, wherein the styrene polymer is polystyrene whose $^1$H-N.M.R. spectrum shows chemical shifts of the methynic and methylenic protons respectively centered at 1.9 and 1.4 ppm, and whose residue from extraction with methyl-ethyl-ketone (MEK) shows, in the X-ray diffraction spectrum, after melting and solidification, highest-intensity reflexes corresponding to interplanar distances of 13.1 Å, 7.6 Å, 6.46 Å, 4.37 Å, and 2.58 Å. (1.31, 0.76, 0.646, 0.437 and 0.258nm, respectively).

6. A composition according to any of claims from 1 to 4, wherein the styrene polymer is poly-paramethylstyrene whose X-ray diffraction spectrum of a stretched fibre shows a repetition period of 5.1 Å (0.51mn), along the chain axis, and whose $^{13}$C-N.M.R. spectrum shows a single peak at 140.8 ppm in the region of the chemical shifts of the ring carbon atom linked to the -CH- group of the main chain.

7. A composition according to any of the preceding claims, wherein the styrene polymer is added to the thermoplastic polyester resin in amounts not larger than 30% by weight, in the range of from 0.01% up to 10% by weight, relative to the polyester resin.

8. A composition according to any of the preceding claims, wherein the polyester resin is poly-(ethylene terephthalate) or a copolymer thereof containing units deriving from poly-oxyethylene-glycol.

9. A process for forming a composition according to any of the preceding claims in which the nucleating agent is mixed with the polyester.

10. A process according to claim 9 in which a masterbatch containing the nucleating agent and polyester is made up and portions of the masterbatch are mixed with polyester resin to form the composition.

11. A process according to claim 10, wherein the masterbatch is prepared by compounding the polyester resin with the styrene polymer in amounts such that the styrene polymer is present in the masterbatch in an amount in the range of from 0.5% up to 30%, preferably in the range of from 2% up to 30% by weight, relative to the weight of the polyester resin in the masterbatch.

12. A process according to claim 10 or claim 11, wherein the masterbatch is added to the polyester resin in amounts in the range of from 1 to 50%, preferably in the range of from 2 up to 20%, relative to the amount of said resin to which the masterbatch is added.

13. A moulding process in which a composition according to any of claims 1 to 8 or the product of a process according to any of claims 9 to 12 is injection moulded.